## Europäisches Patentamt

## European Patent Office

## Office européen des brevets

(11) Publication number: **0 211 333**
**B1**

## EUROPEAN PATENT SPECIFICATION

(45) Date of publication of patent specification: **25.10.89**

(21) Application number: **86110134.3**

(22) Date of filing: **07.04.81**

(60) Publication number of the earlier application in accordance with Art. 76 EPC: **0 062 067**

(51) Int. Cl.⁴: **B 21 D 53/84**, B 21 D 17/02, F 16 D 3/20

(54) **Manufacturing method for a tubular shell of a universal-joint.**

(30) Priority: **24.05.80 JP 69499/80**

(43) Date of publication of application:
**25.02.87 Bulletin 87/09**

(45) Publication of the grant of the patent:
**25.10.89 Bulletin 89/43**

(84) Designated Contracting States:
**DE FR GB**

(56) References cited:
**DE-A-2 044 724**
**US-A-2 352 776**
**US-A-3 792 596**

(73) Proprietor: **TOYOTA JIDOSHA KABUSHIKI KAISHA**
**1, Toyota-cho Toyota-shi**
**Aichi-ken 471 (JP)**

(72) Inventor: **Takeda, Koichi**
**1, Shimoyose Kitahongo-cho**
**Okazaki-shi Aichi 444 (JP)**
Inventor: **Ikeda, Sadao**
**34-3, Shiokura Hanazono-cho**
**Toyota-shi Aichi 473 (JP)**
Inventor: **Matsubara, Koichi**
**522, Toyota-cho**
**Toyota-shi Aichi 471 (JP)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**D-8000 München 2 (DE)**

Courier Press, Leamington Spa, England.

## Description

This invention relates to a manufacturing method for a tubular shell of a universal-joint according to the precharacterizing portion of claim 1, as known, for example, from US—A—2 352 776.

As a species of universal-joints for flexibly joining a pair of rotary shafts, one is known wherein rotary movement of one rotary shaft is transmitted to the other rotary shaft such that one end of a shell of the universal-joint is fixed to one rotary shaft, such as a differential side gear shaft in a vehicle, while the other end of the shell allows the other rotary shaft to be inserted thereinto so as to perform the transmission through engagement of an engaging portion disposed on the other shaft, for example rollers with grooves axially formed on the internal side of the shell.

In some universal-joints belonging to this category such as tripod joint, double offset plunging joint, Rzeppa joint, Weiss joint, etc., the shell has been conventionally manufactured by forming a hollow cylindrical material piece or blank having a thick wall through extrusion such as hot forging or cold forging, followed by a forging step applied on the thick walled material piece with a punch and a die and a machining step for forming the grooves to a desired shape and dimension.

The above-mentioned manufacturing method is problematical in various respects, for example, being low in productivity because of its laborious and time-consuming step of machining, consequent cost rising, or deterioration of strength of the products because of machining or cutting of the material after the forging.

Adoption of the forging process inherently requires a large wall-thickness of the material pieces and results in thick-walled products, which are, to a great disadvantage heavy and expensive in material cost.

US—A—2 352 776 discloses a manufacturing method for a tubular shell, wherein the circumferentially spaced grooves at the inner circumferential wall of the tubular shell are mainly formed in a single step and are then only subjected to a finishing process.

It was found out, the tubular shells produced in this manner were very frequently damaged at the transitional area between the flange and the tubular body when high forces between the two rotary shafts to be connected were transmitted.

The object of the invention is to provide a method for producing a tubular shell of a universal joint by which a damaging of the transitional area between the flange and the tubular body is prevented reliably even in case of high forces to be transmitted.

According to the invention this object is achieved by a manufacturing method comprising the features of the characterizing portion of claim 1.

This manufacturing method enables reduction of the weight of the finished articles and elimination of machining for the finish formation of the grooves. Moreover, the finished articles are excellent in strength and highly reliable.

Brief description of drawings

Fig. 1 is an elevational sectional view for showing how a universal-joint including a tubular shell manufactured according to a preferred embodiment of the invention is connected with rotary shafts;

Fig. 2 is a profile of the tubular shell in Fig. 1;

Fig. 3 is a sectional view taken along the section line 3—3 in Fig. 2;

Fig. 4 is a chart for showing manufacturing steps of an embodiment of the invention;

Fig. 5 is an elevational sectional view of dies performing the fourth (IV) manufacturing step shown in Fig. 4;

Fig. 6 is a chart for showing manufacturing steps of another embodiment of the invention.

An embodiment of the inventive manufacturing method applied to a tubular shell of a constant velocity universal-joint for coupling a differential side gear shaft of a vehicle with a countershaft transmitting the rotational motion of the former, will be described hereunder in detail with reference to the appended drawings.

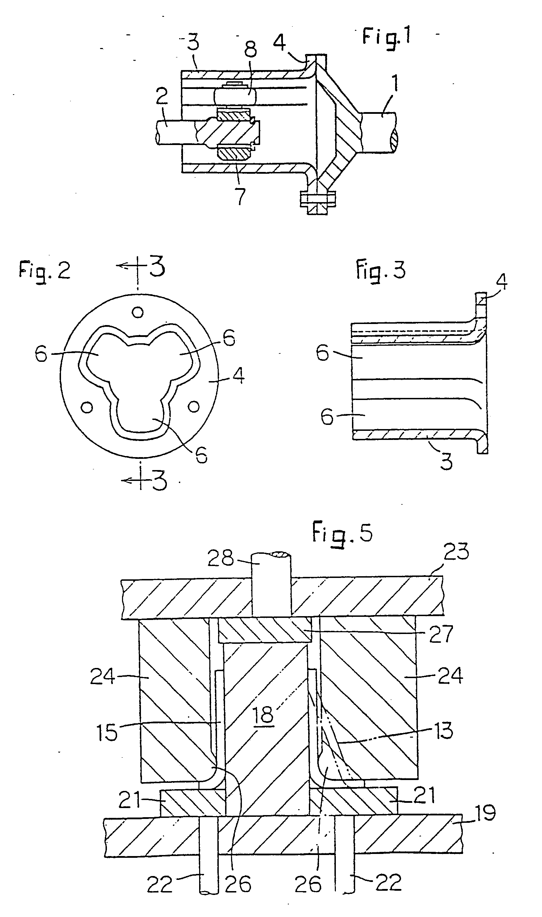

In Figs. 1—3 a universal-joint of tripod type secured on a differential side gear shaft 1 for transmitting rotation to a countershaft 2 is illustrated. A tubular shell 3 is a hollow cylindrical body open on either end, being connected at one end thereof having a flange 4 with the shaft 1 by means of bolts. The shell 3 is provided on the internal side thereof with three circumferentially spaced grooves 6 extending along the axis of the tubular shell 3. A fixed member 7 secured on the end portion of the countershaft 2 is adapted to be engaged with the groove 6 by way of a roller 8, the fixed member 7 and the roller 8 forming an engaging portion 7, 8 of the countershaft 2.

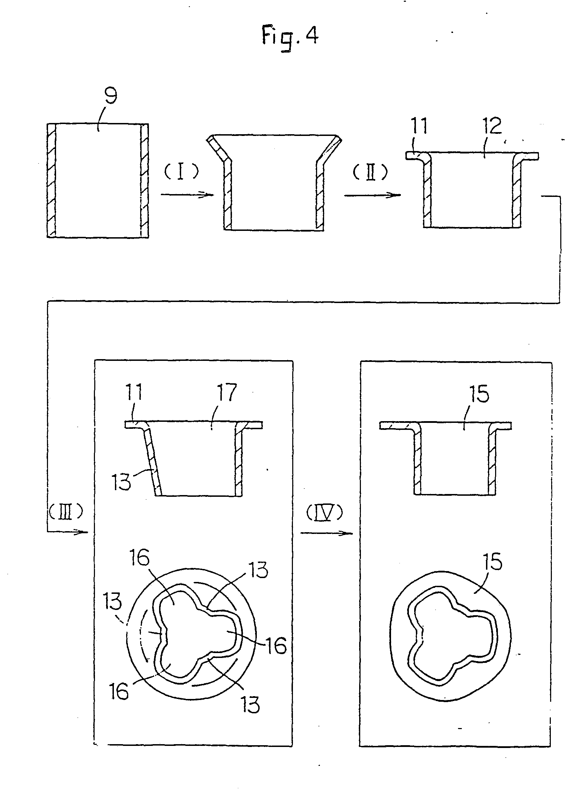

A manufacturing method for the universal-joint having such a structure will be described with reference to the chart in Fig. 4. On a hollow cylindrical material piece 9 having almost the same wall thickness and external diameter as a finished article or tubular shell 15 a preliminary flange formation step is applied for forming a preliminary flange 11 thereon. This flange formation step is composed of a first flanging step (I) and a second flanging step (II); the number of flanging steps is suitably determined depending on the quality of the cylindrical material piece 9 and the external diameter of the formed preliminary flange 11. The preliminary flange formation step is followed by such treatments as annealing, shot-blast, phosphate pickling, etc. (These treatments may be applied beforehand on the cylindrical material piece 9 or on a later described plate material piece 29), and preliminary formation (III) of a semi-finished article 17 having tapered preliminary inwardly protruding portions 13. This preliminary formation step (III) is for facilitating finish formation of circumferentially spaced grooves 16 in a final or finishing formation step (IV). In this preliminary formation step (III) a cylindrical portion of a hollow cylindrical flanged piece 12 is protruded at a suitable number of circumferentially spaced places thereof inwardly by means of a known method, for example, press drawing or stamping, to form tapered preliminary inwardly protruding portions each of them protruding further and further inwardly, that is nearer to the axis of the flange piece 12, starting from the end with the preliminary flange 11 toward the other end of the flanged piece 12. Consequently, the grooves 16 are correspondingly formed between every two neighboring protruding portions 13 along the axis of the flanged piece 12. Ironing and drawing is applied on the semi-finished article 17 with the tapered preliminary inwardly protruding portions 13 as finish formation for providing the finished article or tubular shell 15 having the grooves 16 formed into an optimal shape and dimension. The finish formation step (IV) will be described in detail along with a machine therefor shown in Fig. 1.

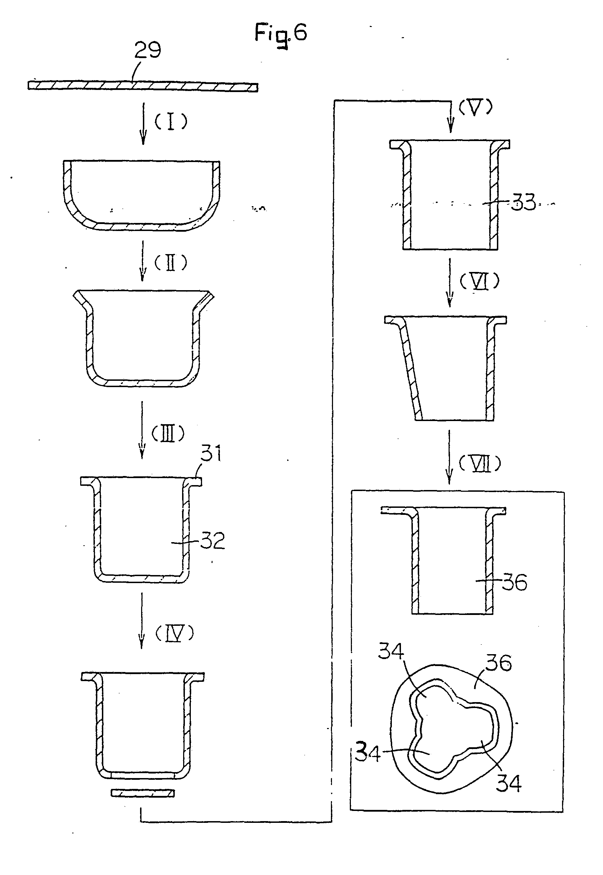

In Fig. 5, numeral 18 designates a punch secured to a lower base 19. The punch 18 is provided at three places corresponding to the preliminary inwardly protruding portions 13 on the semi-finished article 17 with recessed portions, and the external configuration is formed complementary to the internal configuration of the finished article 15. On the lower base 19 a knock-out plate 21 is disposed, which is connected to eject pins 22 secured to a not shown lower die plate for being pushed upwards guided by the punch 18. On the lower side of an ascend- and descendable upper base 23 a ring-shaped ironing die 24 is secured with bolts or the like. On the internal peripheral portion at the lower end of the die 24 an inwardly protruding actional portion 26 is formed. This actional portion 26 is formed such that the internal peripheral line thereof is faced to, with a slightly smaller distance than the wall thickness of the semi-finished article 17 spaced from, the external peripheral line of the punch 18. On the lower side of the upper base 23 a knock-out plate 27 which is larger in section that the punch 18 is disposed. This knock-out plate 27 is placed within the die 24 with a space from the latter, and connected to an eject pin 28 for being pushed downwards due to descending of the eject pin 28. The step for performing the ironing with such a machine will be described. Semi-finished article 17 is fixed on the punch 18, first of all, with its end opposite to preliminary the flange 11 where the tapered preliminary inwardly protruding portions 13 are protruded inwardly farthest being placed upper side. The preliminary flange 11 of the semi-finished article 17 is contacted with the knock-out plate 21 at this time. When the die 24 is descended together with the upper base 23 thereafter, the tapered preliminary inwardly protruding portions 13 formed in the semi-finished article 17 will be gradually forced by ironing simultaneously accompanied by drawing, as the die 24 is descended, so as to gradually render the same further inwardly protruded from the upper portion to the lower portion, and the area surrounding the circumferentially spaced grooves 16 shown in Fig. 4 will be ironed at the same time by the die 24 and the punch 18 for being formed into an optimal shape. It signifies, in other words, that one part of the drawing step is carried out during the preliminary formation step and another part during the finish formation step i.e., during the ironing step the latter part of the drawing step and the ironing step being carried out simultaneously. The upper base 23 begins to ascend when it has reached its lower dead point. If the finished article 15 is stuck to the punch 18, it is removed from the punch 18 by means of pushing upwards the knock-out plate 21 together with the eject pins 22. When the finished article 15 is stuck to the die 24, on the contrary, it is removed therefrom by means of pushing downwards the other knock-out plate 27 accompanied with the eject pin 28. Herewith the ironing process of the grooves 16 is completed.

The above-mentioned embodiment is concerned to a forming method of the tubular shell 15 from the hollow cylindrical material piece 9. The shell 15 however can be made even from a plate material. This method will be described hereunder.

Numeral 29 in Fig. 6 designates a flat plate material piece, which can be formed, through a first drawing or stamping step (I), a flanging step (II), and a further drawing step (III), into a hollow cylindrical piece 32 with a bottom and provided with a flange 31. The number of drawing steps will be suitably determined by the quality of the material, and the diameter, length, etc., of the cylindrical piece 32, just like in the aforementioned embodiment. This cylindrical piece 32 is removed of the bottom by a subsequent press punching step (IV), further followed by a step (V) of extending the cylindrical portion, in the neighborhood of the bottom into a straight shape for making the cylindrical piece 32 a truly hollow cylindrical flanged piece 33, which can be, just in the similar way as described for the previous embodiment, i.e., by the preliminary formation step (VI) and the finish formation step (VII), made into a tubular shell 36 having circumferentially spaced grooves 34 of desired shape and dimension.

## Claims

1. Manufacturing method for a tubular shell (3, 15, 36) of a universal-joint for flexibly coupling a first rotary shaft (1) to a second rotary shaft (2), said shell (3, 15, 36) being adapted to be secured at a flange (4) formed at one end thereof to said first rotary shaft (1) and being provided at its inner circumferential wall with circumferentially spaced grooves (6, 16, 34) extending along the axis thereof for being engaged with engaging portions (7, 8) disposed at one end of said second rotary shaft (2) which is to be inserted into said shell from the other end thereof, characterized in that said method comprises the steps of:
preliminary formation of a semi-finished article (17), wherein radial pressing forces are applied to a hollow cylindrical flanged piece (12, 33) having a preliminary flange (11) at a first end thereof for forming tapered preliminary inwardly protruding portions (13) and grooves (16) between every two of said tapered preliminary inwardly protruding portions (13), said radial pressing forces pressing a plurality of circumferentially spaced side wall portions of said flanged piece (12, 33) inwardly such that said circumferentially spaced side wall portions gradually approach the axis of said flanged piece (12, 33) from said first end towards a second end thereof; and

finish formation wherein said grooves (16) and inwardly protruding portions (13) are finished into accurate shape by means of inserting a punch (18) inside said semi-finished article (17) made in said preliminary formation process, and moving a ring-shaped ironing die (24), with a clearance left between said punch (18) and said ironing die (24) slightly smaller than the wall thickness of said semi-finished article (17), in an axial direction from said second end to said first end along the outer surface of said semi-finished article (17) whereby said tapered preliminary inwardly protruding portions (13) are further pressed such as to produce finished inwardly protruding portions extending parallel to the axis of said tubular shell (3, 15, 36) and simultaneously radial inner flange portions are formed extending between an inner circumference of said preliminary flange (11) and the roots of said inwardly protruding portions (13).

2. Manufacturing method for a tubular shell according to claim 1, wherein said preliminary formation of said tapered preliminary inwardly protruding portions (13) and said grooves (16) is carried out on said hollow cylindrical flanged piece (12, 33) with a press machine.

3. Manufacturing method for a tubular shell according to claim 1 or 2, wherein said hollow cylindrical flanged piece (12, 33) is made of a plate material piece (29) formed by means of a drawing process applied by a press machine.

**Patentansprüche**

1. Verfahren zur Herstellung eines rohrförmigen Gehäuses (3, 15, 36) eines Kardangelenks zur flexiblen Verbindung einer ersten Drehwelle (1) mit einer zweiten Drehwelle (2), wobei das Gehäuse (3, 15, 26) an einem an seinem einen Ende ausgebildeten Flansch (4) an der ersten Drehwelle (1) zu befestigen und an seiner Innenumfangswand mit in Umfangsrichtung beabstandeten Kehlen (6, 16, 34) versehen ist, die sich längs seiner Achse für einen Eingriff mit Eingriffsteilen (7, 8), welche am einen Ende der zweiten, in das Gehäuse von dessen anderem Ende her einzusetzenden Drehwelle (2) angeordnet sind, erstrechen, dadurch gekennzeichnet, daß das Verfahren die Schritte umfaßt:

—der vorbereitenden Ausbildung eines Halbfertigerzeugnisses (17), wobei radiale Druckkräfte auf ein hohlzylindrisches Flanschwerkstück (12, 33), das einen Vorflansch (11) an seinem ersten Ende hat, aufgebracht werden, um sich verjüngende, vorläufige, einwärts vorragende Teile (13) sowie Kehlen (16) zwischen jeweils zwei sich verjüngenden, vorläufigen, einwärts vorragenden Teilen (13) auszubilden, und diese radialen Druckkräft eine Mehrzah von in Umfangsrichtung beabstandeten Seppenwandteilen des Flanschwerkstücks (12, 33) einwärts pressen, so daß die in Umfangsrichtung beabstandeten Seitenwandteile sich allmählich der Achse des Flanschwerkstücks (12, 33) von dessen erstem Ende zum zweiten Ende hinnahern, und

—der Fertig-Ausbildung, wobei die Kehlen (16) sowie die einwärts vorragenden Teile (13) zu einer genauen Gestalt fertigbearbeitet werden, indem ein Stempel (18) in das Innere des im vorbereitenden Ausbildungsprozeß gefertigten Halbfertigerzeugnisses (17) eingesetzt sowie ein ringförmiges Ziehwerkzeug (24) unter Belassen eines geringfügig gegenüber der Wanddicke des Halbfertigerzeugnisses (17) kleineren Freiraumes zwischen dem Stempel (18) und dem Ziehwerkzeug (24) in einer axialen Richtung vom zweiten zum ersten Ende längs der Außenoberfläche des Halbfertigerzeugnisses (17) bewegt wird, so daß die sich verjüngenden, vorläufigen, einwärts vorragenden Teile (13) weiter gepreßt werden, um fertigbearbeiteteeinwärts ragende Teile, die parallel zur Achse des rohrförmigen Gehäuses verlaufen, zu erzeugen, und gleichzeitig radiale innere Flanschteile, die sich zwischen einem Innenumfang des Vorflansches (11) sowie den Ausgangspunkten der einwärts vorragenden Teile (13) erstrekken, gebildet werden.

2. Verfahren zur Herstellung eines rohrförmigen Gehäuses nach Anspruch 1, dadurch gekennzeichnet, daß die vorläufige Ausbildung der sich verjüngenden, vorläufigen, einwärts vorragenden Teile (13) und der Kehlen (16) an dem hohlen, zylindrischen Flanschwerkstück (12, 33) mit einer Presse ausgeführt wird.

3. Verfahren zur Herstellung eines rohrförmigen Gehäuses, nach Anspruch 1 oder 2, dadurch gekennzeichnet, daß das hohle, zylindrische Flanschwerkstück (12, 33) aus einem Plattenmaterialstück (29), das mittels eines von einer Presse ausgeführten Ziehvorgangs verformt wird, gefertigt wird.

**Revendications**

1. Procédé de fabrication d'une enveloppe tubulaire (3, 15, 36) pour un joint universel ou homocinétique afin d'accoupler de manière flexible un premier arbre tournant (1) à un second arbre tournant (2), ladite enveloppe (3, 15, 36) étant susceptible d'être fixée, à une bride ou flasque (4) formée à l'une de ses extrémités, audit premier arbre tournant (1) et étant pourvue sur sa paroi circonférentielle intérieure de gorges (6, 16, 34) réparties sur le pourtour et s'étendant le long de l'axe de l'enveloppe (3, 15, 16) afin d'être en contact avec des parties de contact (7, 8) disposées à une extrémité dudit second arbre tournant (2) devant être inséré à l'intérieur de ladite enveloppe par l'autre de ses extrémités, caractérisé en ce que ledit procédé comprend les étapes suivantes consistant en:

la formation préliminaire d'un article semi-fini (17), dans laquelle des forces radiales de pressage sont appliquées à une pièce cylindrique creuse et à bride (12, 33) présentant une bride préliminaire (11) à une première de ses extrémité, pour former des parties préliminaires coniques en saillie vers l'intérieur (13) et des gorges préliminaires (16) situées chacune entre deux des parties préliminaires coniques en saillie vers l'intérieur (13), lesdites forces radiales de pressage pressant une pluralité de parties de parois latérales espacées circonférentiellement de ladite pièce à bride (12, 33) vers l'intérieur, de sorte que lesdites parties de paroi latérale circonférentiellement espacées se rapprochent graduellement de l'axe de ladite pièce à bride (12, 33) à partir de la dite première extrémité, vers une seconde extrémité de cette dernière; et

la formation de finition, dans laquelle lesdites gorges (16) et lesdites parties en saillie vers l'intérieur (13) sont finies à leur forme précise en insérant un poinçon (18) à l'intérieur de l'article semi-fini (17) réalisé lors du processus de formation préliminaire, et en déplaçant une matrice métallique (24) de forme annulaire, présentant, entre ledit poinçon (18) et ladite matrice métallique (24), un jeu qui est légèrement inférieur à l'épaisseur de paroi dudit article semi-fini (17), dans une direction axiale à partir de ladite second extrémité vers ladite première extrémité, sur la surface extérieure dudit article semi-fini (17), de manière que lesdites parties préliminaires coniques en saillie intérieures (13) subissent un pressage supplémentaire de façon à produire des parties finies en saillie vers l'intérieur, qui s'étendant parallèlement à l'axe de ladite enveloppe tubulaire (3, 15, 36) et, simultanément, que des parties à bride radiale intérieure soient formées en s'étendant entre une circonférence intérieure de ladite bride préliminaire (11) et les racines desdites parties en saillie vers l'intérieur (13).

2. Procédé de fabrication d'une enveloppe tubulaire selon la revendication 1, dans lequel ladite formation préliminaire desdites parties préliminaires coniques en saillie vers l'intérieur (13) et lesdites gorges (16) sont réalisées, par une presse, sur ladite pièce à bride cylindrique creuse (12, 33).

3. Procédé de fabrication d'une enveloppe tubulaire selon la revendication 1 ou 2, dans lequel ladite pièce à bride cylindrique creuse (12, 33) est constituée d'une pièce (29) en un matériau plat qui est formée au moyen d'un processus d'étirage, réalisé par une presse.

EP 0 211 333 B1

Fig.1

Fig.2

Fig.3

Fig.5

## Fig.4

Fig.6